Europäisches Patentamt

**European Patent Office**

**Office européen des brevets**

(11) Publication number: **0 023 409**

**A1**

(12)

# EUROPEAN PATENT APPLICATION

(21) Application number: **80302489.2**

(22) Date of filing: **23.07.80**

(51) Int. Cl.³: **F 16 K 7/16**

(30) Priority: **28.07.79 GB 7926380**

(43) Date of publication of application:
**04.02.81 Bulletin 81/5**

(84) Designated Contracting States:
**DE FR GB**

(71) Applicant: **WATERFIELD ENGINEERING LIMITED**
**71 Kingsway**
**Chandler's Ford Hampshire S05 1FH(GB)**

(72) Inventor: **Waterfield, Timothy Ottiwell Wykeham**
**71 Kingsway**
**Chandler's Ford Hampshire, S05 1FH(GB)**

(74) Representative: **Massey, Alexander et al,**
**MARKS & CLERK Scottish Life House Bridge Street**
**Manchester, M3 3DP(GB)**

(54) Diaphragm valves.

(57) A diaphragm for a diaphragm valve is moulded to provide a configuration which is skewed or curvilinearly inclined as indicated at (13) towards the periphery of the diaphragm (10) whereby uniform flexing characteristics of the diaphragm are attained.

FIG. 3

2.

This invention relates to diaphragm valves.

The construction and operation of diaphragm valves are well known to those skilled in the valve art and consequently a detailed description thereof is not deemed necessary herein.  Suffice it to say that in referring to diaphragm valves we mean a valve sealing on the periphery of a diaphragm with either a flat or non-flat (sometimes called "saddle shaped") flange.

The present invention is particularly concerned with the design of diaphragms employed in diaphragm valves.

In designing such diaphragms there is a possibility of excess elastomer being incorporated in the diaphragm which renders its flexing characteristics variable under different usage conditions, and it is an object of the present invention to obviate or mitigate this drawback.

According to the present invention there is provided a diaphragm for a diaphragm valve, the diaphragm is moulded to have a configuration which is skewed or curvilinearly inclined towards the diaphragm periphery.

Embodiments of the present invention will now be described, by way of example, with reference to the accompanying drawings, in which:-

Fig. 1 is a plan view of a preferred diaphragm design;

3.

Fig. 2 is a section on the line II-II of Fig. 1;

Fig. 3 is a view of the diaphragm looking in the direction of arrow X of Fig. 1;

Fig. 4 is a side elevation of a diaphragm valve incorporating a diaphragm according to the invention;

Fig. 5 is a section on the line IV-IV of Fig. 4;

Fig. 6 is a plan view of the diaphragm;

Fig. 7 is a part sectional end view of the diaphragm on the line VII-VII of Fig. 6; and

Fig. 8 is a fragmentary sectional view of another aspect of a diaphragm valve according to the invention.

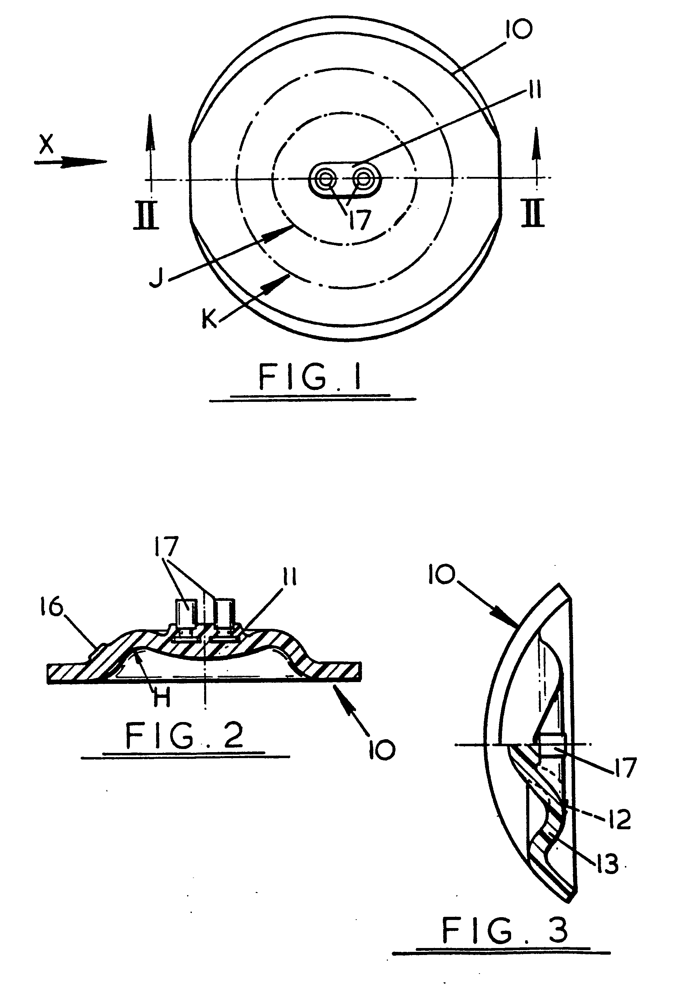

Referring to Figs. 1 to 3 there is shown a preferred diaphragm design which it is considered obviates the problem of the incorporation of excess elastomer when designing a diaphragm and consequently provides for a more uniform flexing characteristics of the diaphragm irrespective of the operational usage of the diaphragm valve.

Consider the arbitrarily spaced lines "J" and "K" (Fig. 1) on the saddle-shaped diaphragm 10. At certain positions the moulded lengths of "J" and "K" in a conventionally designed diaphragm are longer than required and the diaphragm 10 deforms and this can seriously distort the shape of section II-II. With such previous designs the amount of excess elastomer has tended to increase (for sections similar to "J" and "K") with positions closer to the central boss 11,

4.

i.e. there will be greater excess rubber along "J" than along "K".

Fig. 3 shows that the sections taken generally relative to the centre of the diaphragm 10 have been constructed from curves which closely resemble a series of blending radii. The outline of such a section in a conventional diaphragm is shown dotted as indicated at 12. A better section shape is one according to the present invention which shows a pronounced "skew" 13 towards the diaphragm periphery. Such a shape largely overcomes the problems of excess rubber.

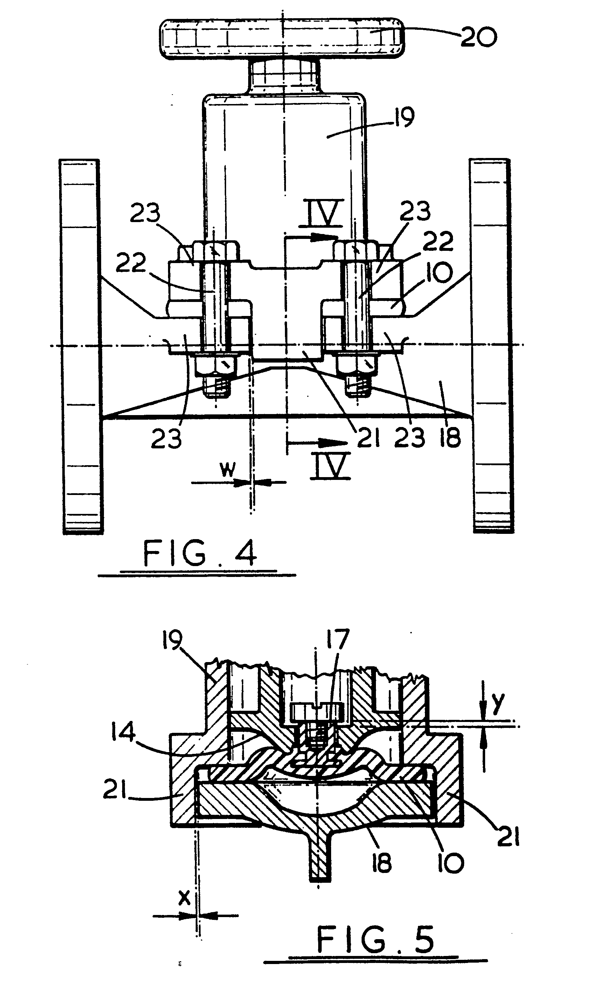

With many thick diaphragms it is difficult to control where and how they flex during opening and closing. The ideal is a diaphragm which will behave in the same way whether it be used for pressure or vacuum on a hot or cold service. The position of the pressure plate of the customary compressor 14 (see Fig. 5) should dictate the shape of the diaphragm 10. Control can be achieved by using any of the following singly or in combination:

(i)    Local thickening 16 and/or local thinning (Fig. 2) at point "H" where the initial or primary fold of the diaphragm occurs.

(ii)   The use of local compounds of different stiffness to produce the main body of diaphragm.

(iii)  The shape and positioning of stud or studs 17 which are used to fix the diaphragm 10 to the compressor 14.

5.

(iv)    The use of reinforcement for example woven-synthetic fabrics, and where same is used in the diaphragm.

Referring now to Figs. 4 to 7, it can be seen that the valve comprises the customary body 18, diaphragm 10, cover 19 and operating handwheel 20. In this instance, the cover 19 is correctly positioned on the body 18 by one or more locating tongues 21. It will be manifest that the locating tongue or tongues can be provided on the cover 19 and/or the body 18. As a result the bolts or studs 22 which secure the cover 19 to the body 18 need not serve the function of accurately locating the cover on the body. The bolt-receiving holes can be widely toleranced or/in the present example replaced by open lugs 23 on both the body 18 and cover 19.

The clearances between the tongue 21 and mating components of the valve are measured as shown by dimensions "w" and "x". These dimensions are dictated by the configuration of the peripheral flange of the valve. For example, with a non-flat Vee form flange which has substantial self-locating characteristics, the only guidance required will be given by dimension 'x'. By comparison, with a valve body having a flat peripheral flange the tongue or tongues 21 are required to give complete location on assembly and the clearances 'w' and 'x' will be very small. The tongues can be of dovetailed configuration if desired.

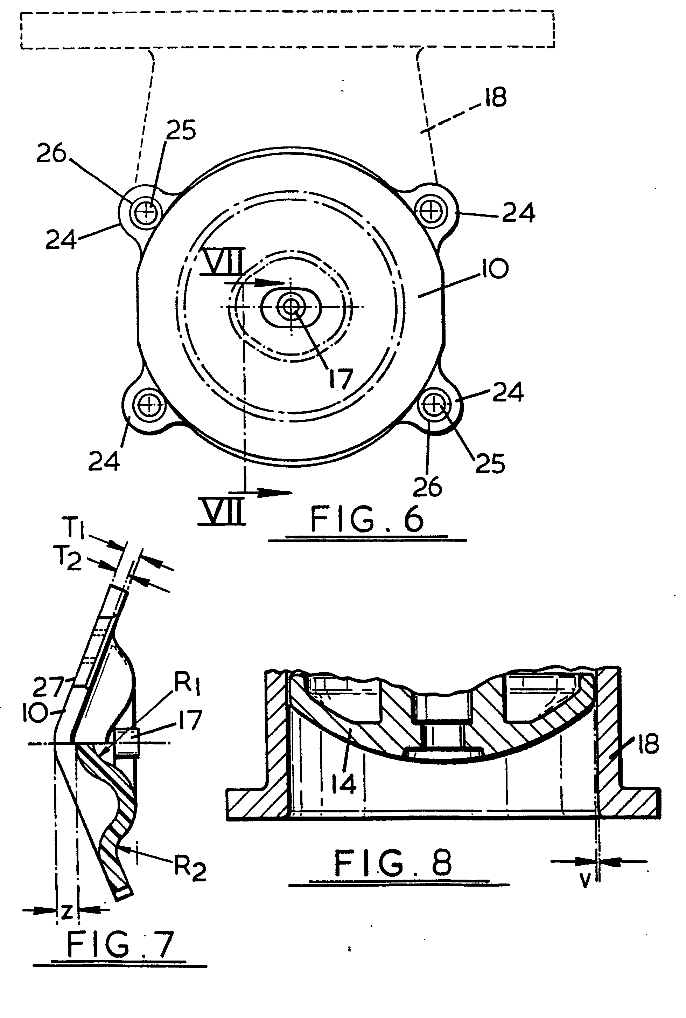

When open lugs 23 are employed as in Fig. 4, assembly of the valve is assisted by locating the bolts 22 in position prior to tightening by means of moulded lugs 24 (see Fig. 6) on the diaphragm 10.

It is known that it is desirable to control the amount of compression of the peripheral flange of the diaphragm 10 between the cover 19 and the body 18. In Fig. 6, each bolt hole 25 is surrounded by one of the ears 24 which is more resistant to compression than the material used to make the flexible portions of the diaphragm 10. This can be achieved by making the ears 24 from a harder compound or by means of a robust insert 26 around the bolt hole 25, or a combination of both.

In Fig. 7 the thickness of the ear 24 may be such that $T_2$ is less than $T_1$. This feature can be used as a visual indication so that on final assembly of the diaphragm T2=T1. Alternatively, it can be used in combination with the ears of Fig. 6.

It is desirable to reduce the forces acting to pull the diaphragm 10 away from its attachment stud 17. A typical application is one involving a vacuum and although adequate performance can be obtained by using reinforcing fabrics around the stud 17 and bonding the stud 17 to the diaphragm elastomer we propose to use a new design feature. Figure 7 shows a moulded diaphragm 10 which has its centre portion a distance $z$ away from the flange datum. On assembly and in operation the stroke of the diaphragm will be less than $z$ by a predetermined amount. With good design the operational forces tending to detach the diaphragm 10 from the stud 17 can be considerably reduced and even eliminated. Such forces arise from the need to assemble diaphragm valves in the closed or nearly closed position, and also from vacuum forces when the diaphragm valve is being employed in a vacuum duty.

Considering the diaphragm of Fig. 4 which is moulded with a saddle shaped flange, there is a tendency for dimension $z$ to increase if the saddle shape is made flatter on assembly. If this is resisted the diaphragm 10 will always push onto the stud 17. This design technique can be used for both flat and non-flat flanged designs and is most effective when a moulding with a non-flat flange is assembled onto a body with a flat flange.

The same diaphragm can be satisfactorily used with its peripheral flange clamped between either flat or saddle-shaped flanges. By using a suitably shaped section between the diaphragm 10 and the cover flange it is possible to use a standard cover assembly. There are occasions when a valve body with a flat flange may be more suitable than one with a saddle-shaped flange. This can arise with flow control applications or when

8.

a valve manifold is employed.

The manner in which a saddle-shaped diaphragm flexes between open and closed positions is difficult to predict. Its flexing characteristics are far more complex than those of a diaphragm made with either a flat flange or a flange described as a frustrum of a cone. Care is necessary with the design of saddle-shaped diaphragms if "locking up" due to excess elastomeric material is to be avoided around a critical stage of flexing which is usually around the mid-open position. This condition can be avoided by maintaining gentle contour curves as shown in Fig. 6. Fig. 7 also shows that it is important for the effective radius of sections about the centre R1 not to be less than half the radius close to the periphery R2.

Referring once again to Fig. 5 there is shown a stud 17 for holding the diaphragm 10 onto the pressure plate 14. The stud 17 is permitted a small controlled amount of movement $y$ relative to the pressure plate 14.

A valve according to the invention has been designed to avoid overclosure damage to diaphragms. However, there is a requirement for certain valves to have the facility to be deliberately so damaged. For example, with existing diaphragm valves it is possible due to fire in a plant for the diaphragm in such a valve to be destroyed resulting in very serious loss of control of the pipeline fluid. If a valve is designed according to

9.

this invention with raised ribs on the face of the pressure plate, then the application of a high closing force will guillotine through the diaphragm thus reducing the area through which uncontrolled fluid can escape. The position of the ribs on the pressure plate is selected to give good control to limit the leakage of pipeline fluid both to atmosphere and across the valve seat. The shape of these ribs, the compounding of the diaphragm and its thickness can all be made to give a predictable and acceptable flex life under normal operation conditions.

There are manufacturing and / technical advantages in making diaphragms with little or no reinforcing fabric and taking advantage of the natural elasticity of the elastomeric material of the diaphragm. For satisfactory diaphragm operation of such non-reinforced diaphragm sheer forces must be kept to a minimum and this is achieved by keeping the clearance between the compressor 14 and the cover 18 small, see dimension $\underline{v}$ in Fig. 8. In practice the clearance should not be more than $\frac{1}{4}$ the thickness of the diaphragm.

Finally, it should be noted that a saddle shaped diaphragm can readily be used with a cover or bonnet having a saddle faced clamping surface and a body with a flat clamping surface if a properly configured adaptor or make-up member is fitted to the bonnet.

CLAIMS:

1. A diaphragm for a diaphragm valve, the diaphragm is moulded to have a configuration which is skewed or curvilinearly inclined towards the diaphragm periphery.

2. A diaphragm according to claim 1 has two peripherally opposed flat areas between which lie two peripherally-opposed radiussed areas incorporating the skew.

3. A diaphragm according to claim 2 in which each radiussed area has a centre radius and a peripheral radius between which the skew lies with the centre radius being not less than half the peripheral radius.

4. A diaphragm according to claim 3, in which local thickening and/or thinning of the diaphragm in the region of the centre radius is provided to achieve flexing control.

5. A diaphragm according to any one of claims 1 to 4 in which the diaphragm is formed of different elastomeric compounds in different local areas to give flexing control.

6. A diaphragm according to any one of claims 1 to 5 incorporating a stud or studs in its central area for attaching the diaphragm to a compressor, the shape and/or positioning of the stud or stud permitting control of flexing of the diaphragm.

11.

7. A diaphragm according to any one of claims 1 to 6 incorporating reinforcement, such, for example, as woven synthetic fibres, which reinforcement is so positioned in the diaphragm structure to give flexing control.

8. A diaphragm according to any one of claims 1 to 7 having an ear surrounding each bolt hole of the diaphragm.

9. A diaphragm according to claim 8 in which each ear is formed of a harder material than the rest of the diaphragm.

10. A diaphragm according to claim 8 in which each ear has a robust insert surrounding the bolt hole.

11. A diaphragm according to claim 8 in which each ear/of less thickness than the rest of the diaphragm.
is

12. A diaphragm valve incorporating a diaphragm as claimed in any one of claims 1 to 11.

13. A diaphragm valve as claimed in claim 12 comprising a cover and a body between which the diaphragm is clamped, the cover being accurately positione on the body by tongue means on the cover or body.

14. A diaphragm valve as claimed in claim 13, in which the cover and body are each provided with open lugs to hold bolts for clamping the diaphragm whereby valve assembly is assisted.

15. A diaphragm valve as claimed in claim 13 or 14, in which diaphragm-clamping surfaces of the cover and

12.

body are flat, or, if curved, are of lesser curvature than the curved periphery of the diaphragm to reduce forces tending to separate the stud or studs from the diaphragm.

16. A diaphragm valve as claimed in any one of claims 12 to 15 incorporating within the cover a compressor to which the diaphragm is secured, the clearance between the compressor and diaphragm being less than one quarter the thickness of the diaphragm to maintain sheer forces on the diaphragm to a minimum.

17. A diaphragm valve as claimed in claim 16 in which ribs are provided on the compressor to guillotine through the diaphragm under the application of a high closing force in the event of likely diaphragm destruction.

0023409

1/3

FIG. 1

FIG. 2

FIG. 3

FIG. 4

FIG. 5

0023409

FIG. 6

FIG. 7

FIG. 8

0023409

## DOCUMENTS CONSIDERED TO BE RELEVANT

| Category | Citation of document with indication, where appropriate, of relevant passages | Relevant to claim |
|---|---|---|
| | US - A - 3 011 758 (R. McFARLAND, JR.)  * fig. 1 to 6, 7, 10 * | 1-4,6, 8,12,16 |
| | US - A - 2 684 829 (R. McFARLAND, JR.)  * fig. 1, 3 * | 1-4,6, 12 |
| | US - A - 2 988 322 (J.H. ANDERSON)  * fig. 1, 4 * | 1-4,12 |
| | DE - B - 1 450 575 (GRINNELL)  * fig. 14 * | 1,2,8, 12,16 |
| | DE - A - 2 414 381 (HILLS-McCANNA)  * claims 1, 2 * | 1,5-7, 12 |
| | DE - C - 976 108 (GRINNELL)  * fig. 7 * | 1,8, 12,16 |
| | GB - A - 926 129 (L. SUMNER)  * page 1, lines 30 to 59; fig. 1 to 6 * | 1,12 |
| | FR - A - 1 271 905 (S.C.A.P.I.)  * fig. 2 * | 14 |
| A | US - A - 3 208 721 (C.P. McHUGH)  * complete document * | |

./..

**CLASSIFICATION OF THE APPLICATION (Int. Cl.³)**

F 16 K 7/16

**TECHNICAL FIELDS SEARCHED (Int.Cl.³)**

F 16 K 7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| ✗ | The present search report has been drawn up for all claims |

| Place of search | Date of completion of the search | Examiner |
|---|---|---|
| Berlin | 22-10-1980 | SCHLABBACH |

EPO Form 1503.1   06.78

## EUROPEAN SEARCH REPORT

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | GB - A - 806 745 (HILLS-McCANNA)  * complete document * | | |
| A | AT - B - 181 152 (HÜBNER & MAYER et al.)  * complete document * | | |
| A | US - A - 2 615 471 (R. McFARLAND, JR.)  * complete document * | | |
| | | | TECHNICAL FIELDS SEARCHED (Int. Cl.³) |

EPO Form 1503.2  06.78